# EUROPÄISCHE PATENTSCHRIFT

(11) **EP 0 694 843 B1**
(45) Veröffentlichungstag und Bekanntmachung des Hinweises auf die Patenterteilung: **17.10.2001**
(21) Anmeldenummer: 95111343.0
(22) Anmeldetag: 19.07.1995
(51) Int. Cl.: G06F 12/06

(54) **Verfahren und Anordnung zur Steuerung einer Sequenz von Zugriffen eines Prozessors zu einem zugeordneten Speicher**
Method and device for controlling a sequence of processor accesses to an associated memory
Procédé et dispositif de commande d'une séquence d'accès de processeur à une mémoire associée

(30) Priorität: 29.07.1994 DE 4427042
(43) Veröffentlichungstag der Anmeldung: 31.01.1996
(73) Patentinhaber: SIEMENS AKTIENGESELLSCHAFT, 80333 München (DE)
(72) Erfinder: Ernst, Edmund, Dipl.-Ing., D-81373 München (DE); Kosler, Wolfgang, Dipl.-Ing., D-81379 München (DE)

(56) Entgegenhaltungen:
- EP-A- 0 530 991
- EP-A- 0 535 670
- GB-A- 2 272 088
- HEWLETT-PACKARD JOURNAL, Bd. 42, Nr. 4, 1.Oktober 1991 Seiten 78-83, XP 000362122 LANG M J ET AL 'THE HP VECTRA 486 MEMORY CONTROLLER'
- IBM TECHNICAL DISCLOSURE BULLETIN, Bd. 34, Nr. 2, 1.Juli 1991 Seiten 43-47, XP 000210559 'ADDRESS GENERATION TIME SAVING CIRCUITRY FOR AN SRAM SEQUENTIAL MEMORY'

## Beschreibung

Die Verarbeitungsleistung von Mikroprozessorsystemen, insbesondere in Kommunikationssystemen, hängt zum einen von der internen Verarbeitungsgeschwindigkeit des Prozessors und zum anderen von der Zugriffsgeschwindigkeit auf einen angeschlossenen Speicher, insbesondere Arbeitsspeicher ab. Da die derzeitigen Mikroprozessorsysteme, beispielsweise 486 DX der Fa. Intel, sehr hohe, interne Verarbeitungsgeschwindigkeiten aufweisen, ist die Verarbeitungsleistung der Mikroprozessoren im wesentlichen durch die Zugriffszeiten auf den angeschlossenen Arbeitsspeicher begrenzt. Für die Ausgestaltung von Arbeitsspeichern für Mikroprozessoren insbesondere in Kommunikationssystemen, d.h. Fernmeldevermittlungsanlagen, werden bisher dynamische RAM-Speicherbausteine (DRAM) eingesetzt, denen ein relativ kleiner externer Cache-Speicher vorgeschaltet ist. In einem Cache-Speicher sind je nach Strategie die am häufigsten oder zuletzt benutzten Arbeitsspeicheradressen und/oder Daten gespeichert. Derartige Arbeitsspeicherkonzepte sind für Personalcomputer-Anwendungen vorteilhaft und erreichen eine akzeptable Verarbeitungsleistung; eine Arbeitsspeicherkonzeption mit nachfolgend beschriebenen Eigenschaften für Kommunikationssysteme kann jedoch nicht erreicht werden.

Ein Arbeitsspeicher für ein Kommunikationssystem, insbesondere eine Kommunikationsanlage sollte folgende Eigenschaften aufweisen:
- Der Arbeitsspeicher für zeitkritische, vermittlungstechnische Programme und Daten liegt im Bereich von einigen MByte bis zu 50 MByte;
- Die vermittlungstechnischen Programme bzw. Subprogramme werden mit annähernd gleicher Wahrscheinlichkeit ausgeführt;
- Das Programm weist häufige Unterbrechungen auf, d.h. längere sequentielle Programmteile treten in vermindertem Umfang auf;
- Die Anzahl von Datenzugriffszyklen ist im Verhältnis zu Programmzugriffszyklen sehr hoch;
- Zugriffe auf Daten sind üblicherweise statistisch unabhängig und finden mit gleicher Wahrscheinlichkeit auf alle Bereiche des Arbeitsspeichers statt;
- Überwiegend weist eine Sequenz von Zugriffen wenige zusammenhängende Zugriffszyklen auf - z.B. drei bis acht.

Bei Mikroprozessorsystemen mit den bekannten Cache-Speichern sind bei der überwiegenden Anzahl von Zugriffszyklen auf den Arbeitsspeicher Wartezyklen erforderlich, die, um die durch den Arbeitsspeicher vorgegebene Zugriffszeit nicht zu unterschreiten, im Rahmen eines Zugriffszykluses im Mikroprozessorsystem gebildet werden. Dies bedeutet eine erhebliche Reduzierung der Verarbeitungsleistung von insbesondere neuzeitlichen Mikroprozessorsystemen, deren interne Verarbeitungsgeschwindigkeiten stets zunehmen.

Aus dem Dokument EP 535670 A1 ist eine Ansteuerschaltung zum Durchführen von sog. Burst-Lesezugriffen auf zwei DRAM-Speicherbausteine (Dynamic Random Access Memory) bekannt. Bei einem Burst-Zugriff können aufeinanderfolgende Lesezugriffe mit bestimmten, vom Prozessortyp vorgegebenen Burst-Adreßsequenzen mit weniger Wartezyklen ausgeführt werden als normale Einzelzugriffe. Zur Koordinierung des Burst-Zugriffs auf beide DRAM-Speicherbausteine weist die Ansteurschaltung eine Adreßlogik sowie für jeden DRAM-Speicherbaustein einen Haltespeicher zum Zwischenspeichern eines aus dem jeweiligen DRAM-Speicherbaustein ausgelesenen Datums auf. Durch die Adreßlogik wird einerseits die Adreßreihenfolge mit der die DRAM-Speicherbausteine adressiert werden, um ein jeweiliges Datum in den Haltespeicher zu übertragen, sowie andererseits die Reihenfolge in der die Haltespeicher das jeweils zwischengespeicherte Datum auf den Datenbus ausgeben, anhand der ersten vom Prozessor ausgegebenen Adresse der Burst-Adreßsequenz festgelegt. Bei Burst-Sequenzen, die mehr Zugriffe umfassen als der Anzahl von DRAM-Speicherbausteinen entspricht, tritt jedoch beim Übergang vom letzten zum ersten DRAM-Speicherbaustein eine direkt in der Zugriffszeit der DRAM-Speicherbausteine begündete Zugriffsverzögerung auf. Da dynamische DRAM-Speicherbausteine nach jedem Lesezugriff eine Erholungszeit benötigen, ist diese Verzögerung zudem verhältnismäßig groß. Außerdem ist bei DRAM-Speicherbausteinen bei aufeinanderfolgenden Burst-Zugriffen jeweils zu prüfen, ob ein nachfolgender Burst-Zugriff auf derselben Speicherseite erfolgt wie der vorangegangene. Falls dies nicht der Fall ist, sind zusätzliche Wartezyklen einzufügen. Dies wirkt sich insbesondere bei einer für vermittlungstechnische Programme charakteristischen Speicherzugriffsverteilung negativ aus.

Aus dem Dokument GB 2272088 A ist weiterhin eine Ansteuerschaltung zum Durchführen von Burst-Lesezugriffen auf ROM-Speicherbausteine (Read Only Memory) bekannt. Hierbei wird zu jeder vom Prozessor generierten Speicheradresse durch Inkrementieren dieser Speicheradresse eine inkrementierte Adresse erzeugt, die jeweils an den von der prozessorgenerierten Adresse aktuell nicht adressierten ROM-Speicherbaustein angelegt wird. Diese Art der Speicheransteuerung erlaubt einen schnelleren Lesezugriff auf die ROM-Speicherbausteine als ein normaler Einzelzugriff; allerdings nur dann, wenn auf aufeinanderfolgende Speicheradressen zugegriffen wird. Viele zeitgemäße Mikroprozessorsysteme, wie z.B. das Mikroprozessorsystem 486 DX der Fa. Intel, führen jedoch auch Burst-Zugriffe auf nicht aufeinanderfolgende Speicheradressen durch. In solchen Fällen wird der Lesezugriff nicht beschleunigt.

Aus der Druckschrift "IBM Technical Disclosure Bulletin", Bd. 34, Nr.2, Juli 1991, Seiten 43-47 ist ferner eine Schaltungsanordnung zur schnellen Adressierung von sequenziell angeordneten SRAM-Speicherbausteinen (Static Random Access Memory) bekannt. Hierbei sind zur Vermeidung einer durch ein Inkrementieren eines Adreßzählers beim Übergang vom letzten zum ersten SRAM-Speicherbaustein bedingten Verzögerung zwei Adreßzähler vorgesehen. Die Adreßinhalte der beiden Adreßzähler sind dabei um den Wert Eins gegeneinander versetzt. Beim Übergang vom letzten zum ersten SRAM-Speicherbaustein wird vom Adreßzähler mit der niedrigeren Adresse auf den Adreßzähler mit der um eins erhöhten Adresse umgeschaltet, was wesentlich weniger Zeit erfordert als ein Inkrementieren eines Adreßzählers. Anschließend wird der Adreßzähler mit der niedrigeren Adresse für den nächsten Zugriffszyklus um den Wert Zwei inkrementiert. Auch diese Schaltungsanordnung eignet sich jedoch nicht zur Beschleunigung von Burst-Speicherzugriffen auf nicht aufeinanderfolgende Speicheradressen.

Der Erfindung liegt die Aufgabe zugrunde, ein Verfahren und eine Anordnung zur Steuerung einer Sequenz von Zugriffen eines Prozessors zu einem zugeordneten Arbeitsspeicher unter Berücksichtigung einer besonders vorteilhaften Speicherkonzeption für Kommunikationssysteme derart auszugestalten, daß die Verarbeitungsleistung insbesondere bei Zugriffen auf den Arbeitsspeicher erhöht wird. Die Aufgabe wird durch ein Verfahren mit den Merkmalen des Patentanspruchs 1 bzw. durch eine Anordnung mit den Merkmalen des Patentanspruchs 6 gelöst.

Das erfindungsgemäße Verfahren basiert auf einer Aufteilung des Speichers, auf den der Mikroprozessor mit kürzesten Zugriffszeiten zugreifen soll, in zumindest zwei durch statische Speicherbänke realisierte Teilspeicher. Statische Schreib-/Lesespeicher weisen kürzere Zugriffszeiten gegenüber dynamischen Schreib-/Lesespeichern auf, wodurch bei einer Unterteilung des Speichers in wenige Teilspeicher bzw. Speicherbänke prozessorgerechte, kurze Speicherzugriffszyklen erreichbar sind. Bei einer vorgegebenen Sequenz von Zugriffen-z.B. vier Zugriffe - werden beim ersten Zugriff auf einen der Teilspeicher die erste Speicheradresse an den adressierten Teilspeicher gelegt und in einer Ansteuerlogik selbständig und unabhängig vom Prozessor für die weiteren Teilspeicher ausgehend von der ersten Speicheradresse die Speicherfolgeadressen sofort gebildet und an die Teilspeicher-bei zwei Teilspeichern an den anderen - gesteuert. Dabei werden die jeweiligen Speicherfolgeadressen und die erste Speicheradresse separat und gleichzeitig zu jedem Teilspeicher geführt, wodurch nach Maßgabe der Statusinformationen ein Lese- oder Schreibzyklus in allen Teilspeichern eingeleitet wird. Die gelesenen oder zu speichernden Daten werden mit Hilfe eines Zwischenspeichers prozessortaktgemäß und prozessorzyklusgemäß vom Speicher an den Prozessor bzw. vom Prozessor an den Speicher transferiert. Die Sequenz von Zugriffen wird beendet, wenn eine vom Prozessor gebildete Speicherfolgeadresse nicht mit der in der Abfolge entsprechenden, in der Ansteuerlogik gebildeten Speicherfolgeadresse übereinstimmt.

Die Anzahl der Teilspeicher ist gemäß einer vorteilhaften Ausgestaltung der Erfindung in Abhängigkeit von dem Differenzbetrag (n - m) der Anzahl der Prozessortakte eines im Speicher (SP) ablaufenden Lese- oder Schreibzyklus und der Anzahl m der Prozessortakte eines über den Prozessorbus (B) gesteuerten Zugriffszyklus auf den Speicher bestimmt - Anspruch 2. Bei einer Mehrzahl von Anwendungen reicht eine Aufteilung des Speichers in zwei Teilspeicher aus, um die durch den Prozessor gesteuerte maximale Zugriffsgeschwindigkeit zu den Teilspeichern zu erreichen. Hierbei werden bei einer Sequenz mit vier Zugriffen die Teilspeicher mit Hilfe der Adressenbits der Wertigkeit 2² und 2³ vor dem Zugriff des Prozessors, d.h. bei zwei Teilspeichern beim jeweils vorhergehenden Zugriff, abwechselnd adressiert. Für die Bildung der Speicherfolgeadressen werden, ausgehend von der ersten Speicheradresse die Adressenbits mit der Wertigkeit 2² und 2³ herangezogen - Anspruch 4. Das Bilden der Speicherfolgeadressen mit Hilfe der Adressenbits mit der Wertigkeit 2² und 2³ erlaubt eine wirtschaftliche Realisierung der Ansteuerlogik. In der Ansteuerlogik sind desweiteren die Speicherfolgeadressen prozessortaktgemäß zu bilden und speicherzugriffszyklusgemäß an den Speicher zu steuern. Derzeitige Mikroprozessoren führen einen Zugriffszyklus zum Speicher minimal in einem oder in zwei Prozessortakten durch, wobei beim ersten Zugriffszyklus einer Sequenz in der Ansteuerlogik die Anzahl der Prozessortakte auf die Speicherzugriffszeit abgestimmt ist und für die weiteren Zugriffe einer Sequenz prozessorgemäße Zugriffszyklen vorgesehen sind - Anspruch 5. In der Ansteuerlogik sind für eine prozessortakt- und zugriffszyklusgemäße Steuerung der Zugriffe auf den Speicher prozessorgetaktete Zwischenspeicher und Logikschaltungen vorgesehen.

Eine Sequenz von Zugriffen kann in der Ansteuerlogik dadurch beendet werden, daß kein weiterer Teilspeicher adressiert wird und folglich keine Daten mehr an den Zwischenspeicher transferiert werden. Der Prozessor stellt dieses Beenden durch das Fehlen von Daten bei den vorgesehenen folgenden Zugriffszyklen fest und initialisiert entsprechende Fehlermeldungen oder Fehlerbeseitigungsmaßnahmen. Auch eine Wiederholung einer Sequenz von Zugriffen kann vorgesehen werden.

Weitere vorteilhafte Ausgestaltungen der Erfindung sind den weiteren Ansprüchen zu entnehmen.

Im folgenden wird das erfindungsgemäße Verfahren und eine erfindungsgemäße Anordnung anhand zweier Blockschaltbilder und eines Ablaufdiagrammes näher erläutert. Dabei zeigen
- FIG 1: die Prozessor- und Speicherkonzeption in einem Kommunikationssystem,
- FIG 2: die Struktur der Ansteuerlogik und
- FIG 3: mit Hilfe eines Ablaufdiagramms die Funktion der Ansteuerlogik.

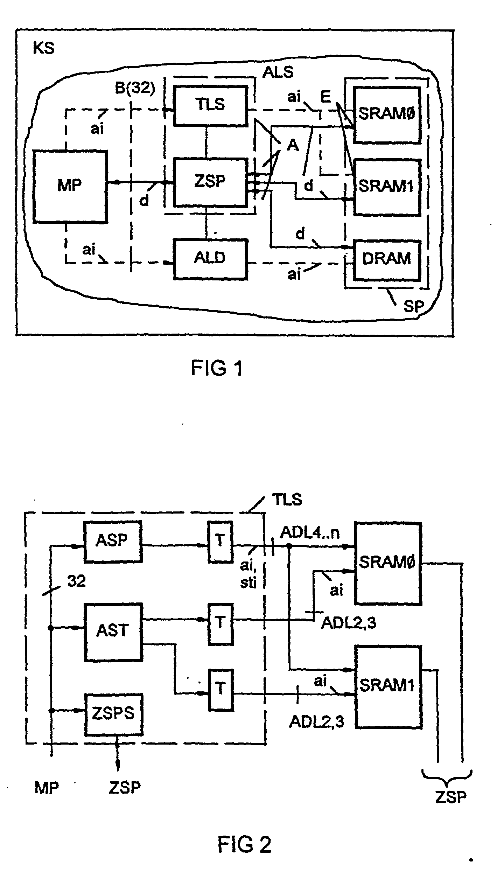

FIG 1 zeigt anhand eines Blockschaltbildes eine Prozessor-und Speicherkonzeption eines Kommunikatonssystems KS, insbesondere einer Fernmeldevermittlungsanlage, in der das erfindungsgemäße Verfahren realisiert ist. Ein Mikroprozessor bzw. ein Mikroprozessorsystem MP ist über einen durch Adreß-/Daten und Statusleitungen gebildeten Prozessorbus B mit einer Ansteuerlogik ALS verbunden, wobei der die Daten d übermittelnde Teil des Prozessorbus B durch Linien und der die Adreßinformationen ai übermittelnde Teil des Prozessorbus B durch gestrichelte Linien angedeutet ist. Der Prozessorbus B weist beispielsweise eine Busbreite von 32 Bit und eine Prozessortaktgeschwindigkeit von 33 MHz auf. Ein Mikroprozessorsystem MP mit derartigen Buseigenschaften stellt beispielsweise das Mikroprozessorsystem 486 DX der Fa. Intel dar. Die den Prozessorbus B repräsentierenden Ausgänge A der Ansteuerlogik sind mit zwei statischen Teilspeichern SRAM Ø,1 verbunden, in denen beispielsweise das vermittlungstechnische Programm einer Fernmeldevermittlungsanlage gespeichert ist. An den Prozessorbus B ist desweiteren eine Ansteuereinrichtung ALD für dynamische Speicher DRAM angeschlossen. Mit Hilfe dieser handelsüblichen Ansteuereinrichtung ALD wird das Schreiben und Lesen von Daten auf bzw. von einem dynamischen Speicher DRAM gesteuert. Die statischen Teilspeicher SRAM Ø,1 und der dynamische Speicher DRAM bilden zusammen den Arbeitsspeicher SP des Mikroprozessorsystem MP, wobei in den statischen Teilspeichern SRAM Ø,1 diejenigen Programme d bzw. Daten d gespeichert sind, für die sehr kurze Zugriffszeiten vorgesehen sind. Im dynamischen Speicher DRAM sind bei Fernmeldevermittlungsanlagen insbesondere Daten d mit längeren Zugriffszeiten gespeichert. Bei einem Zugriff auf den dynamischen Speicher DRAM werden im Mikroprozessor MP Warteinformationen (Wait-States) gebildet, mit deren Hilfe der Zugriff verzögert wird, da bei den dynamischen Speichern DRAM ein Zugriff innerhalb der durch den Mikroprozessor MP kürzesten Zugriffszeit nicht möglich ist. Da das erfindungsgemäße Verfahren auf die statischen Teispeicher SRAM Ø,1 bezogen ist, ist im weiteren der Zugriff auf den dynamischen Speicher DRAM nicht näher erläutert.

Die zwei statischen Teilspeicher SRAM Ø,1 sind durch zwei statische Speicherbänke SRAM Ø,1 gebildet, wobei jeder der statischen Teilspeicher SRAM Ø,1 separat über prozessorbusgemäß realisierte Eingänge E angesteuert wird. Über einen in der Ansteuerlogik AS enthaltenen Zwischenspeicher ZSP, der sowohl mit den statischen Teilspeichern SRAM Ø,1 als auch mit dem dynamischen Speicher DRAM verbunden ist, werden die in die Speicher SRAM Ø,1, DRAM einzulesenden oder von diesen gelesen Befehle d bzw. Daten d zwischengespeichert. Der Zwischenspeicher ZSP ist vorteilhaft durch einen Vier-Wege-Zwischenspeicher (4-Way Bus Exchange Buffer) realisiert, der prozessorgesteuert sowohl zu den beiden statischen Teilspeichern SRAM Ø,1 und dem dynamischen Speicher DRAM als auch zum Mikroprozessor MP die Zwischenspeicherung bewirkt. Diese Zwischenspeicherung ist insbesondere für die prozessortaktgerechte Übergabe der Befehle d bzw. der Daten d an die Speicher DRAM, SRAM Ø,1 erforderlich.

Desweiteren enthält die in der FIG 2 detailliert dargestellte Ansteuerlogik ALS eine Takt- und Logikschaltung TLS. In der Takt- und Logikschaltung TLS ist der Prozessorbus B an einen Adressenzwischenspeicher ASP, eine Adressensteuerung AST und eine Zwischenspeichersteuerung ZSPS geführt. Im Adressenzwischenspeicher ASP werden die vom Mikroprozessor MP übermittelten, durch binäre Informationen repräsentierte Adreßinformationen ai4..n der Adreßleitungen 4 bis n, beim Ausführungsbeispiel 4 bis 31 zwischengespeichert und zusammen mit den in der Adressensteuerung AST gebildeten Adreßinformationen ai2,3 der zweiten und dritten Adreßleitung ADL 2,3 speicherzugriffsgerecht bzw. prozessortaktgerecht an die beiden statischen Teilspeicher SRAM Ø,1 gelegt. Hierbei werden in der Adressensteuerung AST für jeden Teilspeicher bzw. jede Speicherbank SRAM Ø,1 Adreßinformationen ai2,3 gebildet und separat über die Adreßleitungen ADL 2,3 zu den beiden Teilspeicher SRAM Ø,1 geführt. Die Adreßinformationen ai der Adreßleitungen ADL 2 bis n bilden zusammen die Speicheradresse mit der der Teilspeicher SRAM Ø,1 und ein Speicherplatz in dem jeweiligen Teilspeicher SRAM Ø,1 im Sinne eines Lesens oder Schreibens eines Datum adressiert wird. Für eine Signalregenerierung und die Übertragung über die nach der Takt- und Logikschaltung TLS angeordneten Adreßleitungen ADL 0 ..31 ist in diese jeweils eine Leitungstreiberschaltung T eingefügt.

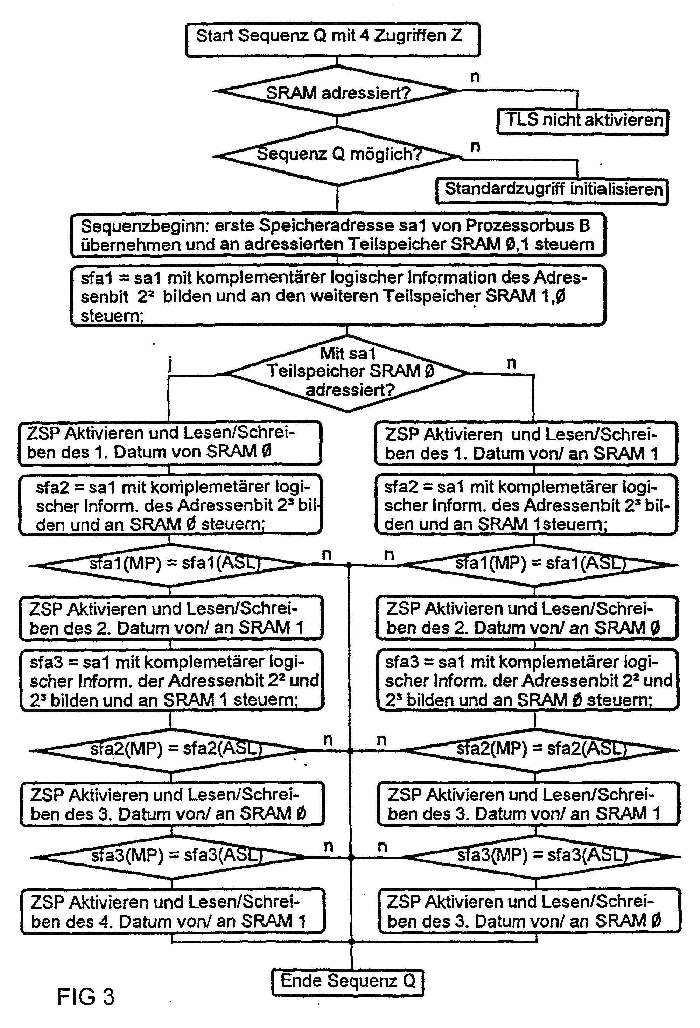

Desweiteren ist in der Takt- und Logikschaltung TLS eine Zwischenspeichersteuerung ZSPS vorgesehen, mit deren Hilfe die Daten bzw. Befehle prozessortaktgerecht in die statischen Teilspeicher SRAM Ø,1 eingeschrieben bzw. aus den statischen Teilspeichern SRAM Ø,1 gelesen werden. Hierzu ist die Zwischenspeichersteuerung ZSPS über eine Steuerleitung SL mit dem Zwischenspeicher ZSP verbunden. Die Funktion bzw. die Wirkungsweise der Takt- und Logikschaltung TLS wird im folgenden anhand des in FIG 3 dargestellten Ablaufdiagrammes näher erläutert.

Beim in FIG 3 dargestellten Ablaufdiagramm wird von einer Sequenz Q von vier Speicherzugriffen bzw. Zugriffen Z ausgegangen. Durch eine von dem Mikroprozessor MP über den Prozessorbus B übermittelte Statusinformation sti wird den Teilspeichern SRAM Ø,1 und dem Zwischenspeicher ZSP mitgeteilt, ob bei den vier Speicherzugriffen Z einer Sequenz Q Daten d oder Befehle d in die Teilspeicher SRAM Ø,1 einzuschreiben, d.h. zu speichern sind oder aus den Teilspeichern SRAM Ø,1 Daten d oder Befehle d ausgelesen werden - in Fig.3 nicht dargestellt. Für die vier Speicherzugriffe Z werden die drei Speicherfolgeadressen sfa1..3, ausgehend von den Adreßinformation ai der ersten Speicheradresse sa1 des ersten Zugriffs Z nach einem sowohl dem Mikroprozessor MP als auch der Takt- und Logikschaltung TLS vorgegeben Algorithmus gebildet. Beim Ausführungsbeispiel wird ausgehend von der logischen Information des Adressenbit mit der Wertigkeit 2² der ersten Speicheradresse sa1 die erste Speicherfolgeadresse sfa1 mit der komplementären logischen Information des Adressenbit mit der Wertigkeit 2² gebildet. Die zweite Speicherfolgeadresse sfa2 wird mit dem Adressenbit der Wertigkeit 2² der ersten Speicheradresse sa1 und mit der komplementären logischen Information des Adressenbit der Wertigkeit 2³ gebildet. Bei der dritten Speicherfolgeadresse sfa3 wird jeweils die komplementäre logische Information der Adressenbits mit der Wertigkeit 2² und der Wertigkeit 2³ der ersten Speicheradresse verwendet.

Zu Beginn einer Sequenz Q wird überprüft, ob ein statischer Teilspeicher SRAM Ø,1 adressiert ist und ob eine Sequenz Q möglich ist. Nach diesen Überprüfungen wird eine Sequenz Q von vier Speicherzugriffen bzw. Zugriffen Z gestartet und ausgehend von der ersten Speicheradresse sa1 werden die Speicherfolgeadressen sfa1..3 gemäß FIG 3 gebildet, wobei in der Ansteuerlogik ALS nach Erkennen der ersten Speicheradresse sa1 die erste Speicheradresse sa1 an den adressierten Teilspeicher SRAM Ø,1 gesteuert bzw. gelegt und annähernd gleichzeitig die erste Speicherfolgeadresse sfa1 gebildet und an den anderen, nicht durch die erste Speicheradresse sfa1 adressierten Teilspeicher SRAM Ø,1 gesteuert bzw. gelegt wird. Hierbei ist festzustellen, daß die einen Speicherplatz innerhalb eines Teilspeichers SRAM Ø,1 adressierende Teiladresse der ersten Speicheradresse sa1 unverändert bleibt. Nach dem Anlegen der ersten Speicheradresse sa1 bzw. ersten Speicherfolgeadressen sfa1 an die beiden Teilspeicher (SRAM Ø,1 wird nach Maßgabe der Statusinformation - beispielsweise Daten d vom Speicher SP lesen - das Lesen oder Schreiben eines Datum d in beiden Teilspeichern SRAM Ø,1 eingeleitet. Der erste Zugriff auf den Speicher SP bzw. auf einen Teilspeicher SRAM 0,1 erfolgt mit Speicherzugriffsgeschwindigkeit, d.h. der Prozessor MP muß beispielsweise durch Einfügen von Wartezyklen - in der Fachwelt als "wait-state"-Zyklen bekannt-den Zugriffszyklus verzögern, d.h. die Zugriffszykluszeit verlängern. Während des ersten Speicherzugriffs wird das beispielsweise gelesene Datum d in den Zwischenspeicher ZSP übernommen und an den Prozessor MP transferiert und anschließend die zweite Speicherfolgeadresse sfa2 gebildet und über die Adreßleitungen ADL 2..n an den durch die erste Speicheradresse sa1 adressierten Teilspeicher SRAM Ø,1 gesteuert bzw. gelegt und nach Maßgabe der Statusinformationen sti ein Lesen oder Schreiben eines Datum d eingeleitet. Hierauf wird durch die Ansteuerlogik ASL der durch die erste Speicherfolgeadresse sfa1 adressierte Teilspeicher SRAM Ø,1 angesteuert - mit Hilfe der ersten Speicherfolgeadresse sfa1 - und das beispielsweise gelesene Datum d prozessortaktgemäß und prozessorzyklusgemäß in den Zwischenspeicher ZSP übernommen und an den Prozessor MP transferiert sowie die dritte Speicherfolgeadresse sfa3 gebildet, an den jeweiligen Teilspeicher SRAM Ø,1 gesteuert bzw. gelegt und nach Maßgabe der Statusinformation sti das Lesen oder Schreiben eines Datum d eingeleitet.

Anschließend wird sukzessive das im den durch die zweite und dritte Speicherfolgeadresse sfa 2,3 adressierten Teilspeicher SRAM Ø,1 beispielsweise gelesene Datum d prozessortakt- und zugriffszyklusgemäß über den Zwischenspeicher ZSP an den Prozessor MP transferiert. Die beiden in Fig. 3 dargestellten, gleichartigen Teilabläufe ergeben sich in Abhängigkeit von dem in der ersten Speicheradresse sa1 adressierten Teilspeicher (SRAM Ø,1).

Durch die sukzessive zyklische Verteilung der Speicherzugriffe Z auf die beiden Teilspeicher SRAM Ø,1 - auch bei mehr als zwei Teilspeichern SRAM 0,1 - sind nach dem ersten Zugriff Z auf den Speicher SP prozessorgerechte Speicherzugriffsgeschwindigkeiten erreichbar, d.h. die Zugriffe sind mit der im Mikroprozessor MP möglichen Geschwindigkeit - z.B. innerhalb eines Prozessortaktes - durchführbar, obwohl die Speicherzugriffszeit der statischen Teilspeicher SRAM Ø,1 wesentlich über der üblichen des Mikroprozessors MP liegt. Vor jedem dem ersten Zugriff Z folgenden Zugriff Z des Prozessors auf den Speicher SP bzw. einen Teilspeicher SRAM Ø,1 wird die in der Takt- und Logikschaltung TLS gebildete Speicherfolgeadresse sfa1..3 mit der im Mikroprozessor MP gebildeten Speicherfolgeadresse sfa1..3 verglichen und bei Übereinstimmung wird die Sequenz Q von Zugriffen Z weitergeführt. Bei fehlender Übereinstimmung wird die Sequenz Q beendet.

Das erfindungsgemäße Verfahren gemäß FIG 3 ist sowohl programm- als auch schaltungstechnisch realisierbar, wobei bei den zur Zeit verfügbaren Mikroprozessoren MP mit hohen Verarbeitungsgeschwindigkeiten eine schaltungstechnische Realisierung vorzuziehen ist. Zu beachten ist hierbei, daß das Bilden der Speicherfolgeadressen sfa1..3 und das abwechselnde Ansteuern der Teilspeicher SRAM 0,1 mikroprozessortaktgerecht durchgeführt wird. Eine Anordnung zum Durchführen des erfindungsgemäßen Verfahren ist folglich mit einer auf die Prozessorgeschwindigkeit und die Anzahl von Prozessortakten je Zugriff abzustimmenden Taktkomponenten zu versehen. Dies sind insbesondere prozessortaktgesteuerte Übernahmeregister oder logische Verknüpfungsglieder. Eine detaillierte Beschreibung einer schaltungstechnischen Ausgestaltungsvariante erscheint überflüssig, da in Abhängigkeit von der vorgesehenen Realisierung durch handelsübliche, anwenderprogrammierbare oder kundenspezifische Schaltkreise eine Vielzahl von Ausbildungen möglich ist.

## Patentansprüche

1. Verfahren zur Steuerung einer vorgegebenen Sequenz (Q) von Zugriffen (Z) eines Prozessors (MP) über einen Prozessorbus (B) zu einem zugeordneten, durch individuell adressierbare Teilspeicher (SRAM Ø,1) gebildeten, statischen Schreib-Lese-Speicher (SP), bei dem die Daten (d) jeweils über einen zugriffszyklusgesteuerten Zwischenspeicher (ZSP) von oder an den Prozessor (MP) transferiert werden und ein über den Prozessorbus (B) gesteuerter Zugriffszyklus (Z) auf den Speicher (SP) m Prozessortakte sowie ein im Speicher (SP) ablaufender Lese- oder Schreibzyklus n Prozessortakte umfaßt, wobei n größer als m ist,
- bei dem eine Sequenz (Q) von Zugriffen (Z) durch zumindest eine erste vom Prozessor gebildete Speicheradresse (sa1) und durch Statusinformationen (sti), die ein Lesen oder Schreiben von Daten (d) aus dem oder in den statischen Schreib-Lese-Speicher (SP) steuern, eingeleitet wird,
- bei dem in einer zwischen Prozessor (MP) und den Teilspeichern (SRAM Ø,1) eingefügten Ansteuerlogik (ALS)
-- nach Empfang der ersten Speicheradresse (sa1) vom Prozessor (MP) diese an den adressierten Teilspeicher (SRAM 0,1) weitergeleietet sowie selbständig und unabhängig vom Prozessor (MP) für die weiteren Teilspeicher (SRAM Ø,1) jeweils eine Speicherfolgeadresse (sfa1) nach Maßgabe der vorgegebenen Sequenz (Q) generiert wird, wobei die jeweiligen Speicherfolgeadressen (sfa1) und die erste Speicheradresse (sa1) separat und gleichzeitig zu jedem Teilspeicher (SRAM Ø,1) geführt werden, wodurch nach Maßgabe der Statusinformationen (sti) ein Lese- oder Schreibzyklus in allen Teilspeichern (SRAM Ø,1) eingeleitet wird, und
-- ausgehend von dem durch die erste Speicheradresse (sa1) adressierten Teilspeicher (SRAM Ø,1) die Teilspeicher (SRAM Ø,1) zyklisch sukzessive sowie zugriffszyklusgemäß nach Maßgabe der Sequenz (Q) angesteuert werden, wobei bei einer Ansteuerung
--- nach Maßgabe der Statusinformationen (sti) ein an dem angesteuerten Teilspeicher (SRAM Ø,1) vorliegendes, gelesenes Datum (d) prozessortaktgemäß im Zwischenspeicher (ZSP) zwischengespeichert und von diesem vom Prozessor (MP) zugriffszyklusgemäß abgeholt wird oder ein vom Prozessor (MP) übermitteltes Datum (d) im Zwischenspeicher (ZSP) gespeichert sowie an den adressierten Teilspeicher (SRAM Ø,1) weitergeleitet wird, wobei
die Sequenz (Q) von Zugriffen (Z) beendet wird, wenn eine vom Prozessor gebildete Speicherfolgeadresse nicht mit der in der Abfolge entsprechenden, in der Ansteuerlogik (ALS) gebildeten Speicherfolgeadresse (sfa1, sfa2, sfa3) übereinstimmt, und,
--- sofern nach Maßgabe der Sequenz (Q) von Zugriffen (Z) vorgesehen, die aktuelle Speicheradresse (sa1, sfa1, sfa2) geändert, an den angesteuerten Teilspeicher (SRAM Ø,1) geführt und nach Maßgabe der Statusinformationen (sti) ein Zugriff (Z) auf den jeweiligen Teilspeicher (SRAM Ø,1) eingeleitet wird.

2. Verfahren nach Anspruch 1,
**dadurch gekennzeichnet,**
**daß** die Anzahl der Teilspeicher (SRAM Ø,1) in Abhängigkeit von dem Differenzbetrag (n - m) der Anzahl n der Prozessortakte eines im Speicher (SP) ablaufenden Lese- oder Schreibzyklus und der Anzahl m der Prozessortakte eines über den Prozessorbus (B) gesteuerten Zugriffszyklus (Z) auf den Speicher (SP) bestimmt ist.

3. Verfahren nach einem der vorhergehenden Ansprüche,
**dadurch gekennzeichnet,**
**daß** nach der ersten, mehrere Adressenbit mit der Wertigkeit 2^{x} umfassenden Speicheradresse (sa1) in der Ansteuerlogik (ALS) für die sukzessive zyklische Adressierung der Teilspeicher (SRAM 0,1) vorgesehene Speicherfolgeadressen (sfa1, sfa2, sfa3) nach Maßgabe der vorgegebenen Sequenz (Q) von Zugriffen (Z) den Adressenbits Adreßinformationen (ai) representierende logische Informationen (Ø,1) derart zugeordnet werden, daß die Teilspeicher (SRAM Ø,1) sukzessiv zyklisch adressiert werden.

4. Verfahren nach Anspruch 3,
**dadurch gekennzeichnet,**
**daß** bei zwei Teilspeichern (SRAM Ø,1) und einer Sequenz (Q) von vier Zugriffszyklen (Z) bei einer Prozessorbusbreite von 32 Bit für eine sukzessive zyklische Adressierung der Teilspeicher (SRAM Ø,1) in der Ansteuerlogik (ALS) unabhängig vom Prozessor (MP) ausgehend von den Adreßinformationen (ai) repräsentierenden logischen Informationen (Ø,1) der Adressenbits der ersten Speicheradresse (sa1) mit der Wertigkeit 2² und 2³ drei Speicherfolgeadressen (sfa1, sfa2, sfa3) gebildet werden, wobei
- die erste Speicherfolgeadresse (sfal) mit der komplementären logischen Information (Ø,1) des Adressenbit mit der Wertigkeit 2²,
- die zweite Speicherfolgeadresse (sfa2) mit der komplementären logischen Information (Ø,1) des Adressenbit mit der Wertigkeit 2³, und
- die dritte Speicherfolgeadresse (sfa3) jeweils mit der komplementären logischen Information (Ø,1) der Adressenbits mit der Wertigkeit 2² und 2³
gebildet wird.

5. Verfahren nach einem der vorhergehenden Ansprüche,
**dadurch gekennzeichnet,**
**daß** ein prozessorgemäßer Zugriffszyklus (Z) innerhalb von zwei oder drei Prozessortakten durchgeführt wird, wobei beim ersten Zugriffszyklus (Z) einer Sequenz (Q) die Anzahl der Prozessortakte auf die Zugriffszeit zum Speicher (SP) abgestimmt ist und für die weiteren Zugriffszyklen (Z) einer Sequenz (Q) prozessorgemäße Zugriffszyklen (Z) vorgesehen sind.

6. Anordnung zur Steuerung einer vorgegebenen Sequenz (Q) von Zugriffen (Z) eines Prozessors (MP) über einen Prozessorbus (B) zu einem zugeordneten, durch individuell adressierbare Teilspeicher (SRAM Ø,1) gebildeten Speicher (SP), wobei ein über den Prozessorbus (B) gesteuerter Zugriffszyklus (Z) auf den Speicher (SP) m Prozessortakte sowie ein im Speicher (SP) ablaufender Lese- oder Schreibzyklus n Prozessortakte umfaßt, wobei n größer als m ist,
- bei der eine Ansteuerlogik (ALS) zwischen Prozessor (MP) und den Teilspeichern (SRAM Ø,1) eingefügt ist
-- mit einem zugriffszyklusgesteuerten Zwischenspeicher (ZSP) zum Transferieren der Daten (d) zwischen dem Prozessor (MP) und dem statischen Schreib-Lese-Speicher (SP),
-- mit Steuermitteln zum Einleiten einer Sequenz (Q) von Zugriffen (Z) durch zumindest eine erste, vom Prozessor (MP) gebildete Speicheradresse (sa1) und durch Statusinformationen (sti), die ein Lesen oder Schreiben von Daten aus oder in den statischen Schreib-Lese-Speicher (SP) steuern, und
-- mit Speicherzugriffsmitteln zum zyklisch sukzessiven sowie zugriffszyklusgemäßen Zugriff auf die Teilspeicher (SRAM Ø,1) ausgehend von dem durch die erste Speicheradresse (sa1) adressierten Teilspeicher (SRAM Ø,1) nach Maßgabe der Sequenz (Q), wobei beim Zugriff
--- nach Maßgabe der Statusinformationen (sti) ein an dem angesteuerten Teilspeicher (SRAM Ø,1) vorliegendes, gelesenes Datum (d) prozessortaktgemäß in dem Zwischenspeicher (ZSP) zwischengespeichert und von diesem vom Prozessor (MP) zugriffszyklusgemäß abgeholt wird oder ein vom Prozessor (MP) übermitteltes Datum (d) im jeweiligen, prozessortaktgesteuerten Zwischenspeicher (ZSP) gespeichert sowie an den adressierten Teilspeicher (SRAM Ø,1) weitergeleitet wird,
**dadurch gekennzeichnet**,
- daß der Speicher (SP) als statischer Schreib-Lese-Speicher ausgebildet ist, und
- daß die Ansteuerlogik (ALS)
-- eine Adressgenerierungseinrichtung aufweist zum selbständigen, von der ersten Speicheradresse (sa1) ausgehenden Generieren einer jeweiligen Speicherfolgeadresse (sfa1) für die weiteren Teilspeicher (SRAM Ø,1) nach Maßgabe der vorgegebenen Sequenz (Q) sowie zum separaten und gleichzeitigen Anlegen der ersten Speicheradresse (sa1) sowie der jeweils generierten Speicherfolgeadressen (sfa1) an jeden Teilspeicher (SRAM Ø,1), wodurch nach Maßgabe der Statusinformationen (sti) ein Lese- oder Schreibzyklus in allen Teilspeichern (SRAM Ø,1) eingeleitet wird, sowie
-- eine Vergleichseinrichtung aufweist zum Vergleichen einer vom Prozessor (MP) gebildeten Speicherfolgeadresse mit einer in der Abfolge entsprechenden, von der Adressgenerierungseinrichtung (AST) gebildeten Speicherfolgeadresse (sfa1, sfa2, sfa3) und zum Beenden der Sequenz (Q) von Zugriffen (Z) bei Nichtübereinstimmung.

7. Anordnung nach Anspruch 6,
**dadurch gekennzeichnet,**
**daß** die Ansteuerlogik (ALS) durch eine Takt- und Logikschaltung (TLS) und den Zwischenspeicher (ZSP) gebildet ist, und
**daß** die Takt- und Logikschaltung (TLS)
- einen Adressenzwischenspeicher (ASP) aufweist und mit denjenigen Adreßleitungen (ADL4..n) des Prozessorbus (B) verbunden ist, deren Adreßinformationen (ai) unverändert an die Teilspeicher (SRAM Ø,1) weiterzuleiten sind, wobei im prozessorgetakteten Adreßzwischenspeicher (ASP) die Adreßinformationen (ai) zwischengespeichert und zugriffszyklusgemäß über weitere Adreßleitungen (ADL4..n) an die Teilspeicher (SRAM 0,1) gesteuert werden, sowie
- mit einer Adressenssteuerung (AST) ausgestattet und mit denjenigen Adreßleitungen (ADL2,3) des Prozessorbus (B) verbunden ist, deren Adreßinformationen (ai) beim ersten Zugriffszyklus (Z) an den adressierten Teilspeicher (SRAM Ø,1) weitergeleitet und deren Folgeadreßinformationen (ai) bei den folgenden Zugriffszyklen (Z) einer Sequenz (Q) in der Adressensteuerung (AST) gebildet, überprüft und an die betreffenden Teilspeicher (SRAM Ø,1) gesteuert werden, und
- durch eine den Zwischenspeicher (ZSP) steuernde Zwischenspeichersteuerung (ZSPS) gebildet ist.

8. Anordnung nach Anspruch 6 oder 7,
**dadurch gekennzeichnet,**
**daß** der Mikroprozessor (MP) und der Zwischenspeicher ZSP mit einer Ansteuereinrichtung (ALD) für dynamische Speicher (DRAM) verbunden ist, und daß die Ansteuereinrichtung (ALD) und der Zwischenspeicher (ZSP) im Sinne eines Lesens und Schreibens von Daten (d) mit einem dynamischen Speicher (DRAM) verbunden ist, wobei der dynamische Speicher DRAM gegenüber den statischen Teilspeichern (SRAM Ø,1) höhere Zugriffszeiten aufweist.

## Claims

1. Method for controlling a prescribed sequence (Q) of access operations (Z) by a processor (MP) via a processor bus (B) to an associated, static read/write memory (SP) formed by individually addressable submemories (SRAM Ø,1), in which the data (d) are transferred from or to the processor (MP) via a respective access-cycle-controlled temporary store (ZSP), and an access cycle (Z), controlled by means of the processor bus (B), to the memory (SP) comprises m processor clock pulses, and a read or write cycle taking place in the memory (SP) comprises n processor clock pulses, where n is greater than m,
- in which a sequence (Q) of access operations (Z) is initiated by at least one first memory address (sa1), formed by the processor, and by status information (sti) which controls reading or writing of data (d) from or to the static read/write memory (SP),
- in which, in a drive logic unit (ALS) inserted between the processor (MP) and the submemories (SRAM Ø,1),
- - once the first memory address (sa1) has been received from the processor (MP), said first memory address is forwarded to the addressed submemory (SRAM 0,1), and a respective subsequent memory address (sfa1) is generated, automatically and independently of the processor (MP), for the further submemories (SRAM Ø,1) in accordance with the prescribed sequence (Q), the respective subsequent memory addresses (sfa1) and the first memory address (sa1) being separately and simultaneously routed to each submemory (SRAM Ø,1), as a result of which a read or write cycle is initiated in all submemories (SRAM Ø,1) in accordance with the status information (sti), and
- - the submemories (SRAM Ø,1) are driven cyclically gradually and on an access cycle basis starting from the submemory (SRAM Ø,1) addressed by the first memory address (sa1), in accordance with the sequence (Q), where, during driving
--- in accordance with the status information (sti), a data item (d) which has been read and is present on the driven submemory (SRAM Ø,1) is temporarily stored in the temporary store (ZSP) on a processor clock pulse basis and is picked up from said temporary store by the processor (MP) on an access cycle basis, or a data item (d) transmitted by the processor (MP) is stored in the temporary store (ZSP) and is forwarded to the addressed submemory (SRAM Ø,1), where the sequence (Q) of access operations (Z) is ended if a subsequent memory address formed by the processor does not match the subsequent memory address (sfa1, sfa2, sfa3), corresponding in terms of order, which is formed in the drive logic unit (ALS), and
--- to the extent provided in accordance with the sequence (Q) of access operations (Z), the current memory address (sa1, sfa1, sfa2) is changed, is routed to the driven submemory (SRAM Ø,1), and an access operation (Z) to the respective submemory (SRAM Ø,1) is initiated in accordance with the status information (sti).

2. Method according to Claim 1,
**characterized**
**in that** the number of submemories (SRAM Ø,1) is determined depending on the difference (n-- m) between the number n of processor clock pulses in a read or write cycle taking place in the memory (SP) and the number m of processor clock pulses in an access cycle (Z), controlled by means of the processor bus (B), to the memory (SP).

3. Method according to one of the preceding claims,
**characterized**
**in that** after the first memory address (sa1), comprising a plurality of address bits having the significance 2^{x}, [lacuna] subsequent memory addresses (sfa1, sfa2, sfa3) provided in the drive logic unit (ALS) for the gradual cyclic addressing of the submemories (SRAM 0,1), logical information (Ø,1) representing address information (ai) is allocated to the address bits in accordance with the prescribed sequence (Q) of access operations (Z) such that the submemories (SRAM Ø,1) are gradually addressed cyclically.

4. Method according to Claim 3,
**characterized**
**in that**, with two submemories (SRAM Ø,1) and a sequence (Q) of four access cycles (Z), with a processor bus width of 32 bits, three subsequent memory addresses (sfa1, sfa2, sfa3) are formed, for gradual cyclic addressing of the submemories (SRAM Ø,1), in the drive logic unit (ALS) independently of the processor (MP) on the basis of logical information (Ø,1), which represents the address information (ai), for the address bits of the first memory address (sa1) having the significance 2² and 2³, where
- the first subsequent memory address (sfa1) is formed with the complementary logical information (Ø,1) of the address bit having the significance 2²,
- the second subsequent memory address (sfa2) is formed with the complementary logical information (Ø,1) of the address bit having the significance 2³, and
- the third subsequent memory address (sfa3) is respectively formed with the complementary logical information (Ø,1) of the address bits having the significance 2² and 2³.

5. Method according to one of the preceding claims,
**characterized**
**in that** a processor-based access cycle (Z) is performed within two or three processor clock pulses, where, in the case of the first access cycle (Z) of a sequence (Q), the number of processor clock pulses is matched to the access time to the memory (SP), and, for the other access cycles (Z) of a sequence (Q), processor-based access cycles (Z) are provided.

6. Arrangement for controlling a prescribed sequence (Q) of access operations (Z) by a processor (MP) via a processor bus (B) to an associated memory (SP) formed by individually addressable submemories (SRAM Ø,1), where an access cycle (Z), controlled by means of the processor bus (B), to the memory (SP) comprises m processor clock pulses, and a read or write cycle taking place in the memory (SP) comprises n processor clock pulses, where n is greater than m,
- in which a drive logic unit (ALS) is inserted between the processor (MP) and the submemories (SRAM Ø,1),
-- having an access-cycle-controlled temporary store (ZSP) for transferring the data (d) between the processor (MP) and the static read/write memory (SP),
-- having control means for the initiation of a sequence (Q) of access operations (Z) by at least one first memory address (sa1), formed by the processor (MP), and by status information (sti) which controls reading or writing of data from or to the static read/write memory (SP), and
-- having memory access means for cyclically gradual and access-cycle-based access to the submemories (SRAM Ø,1) starting from the submemory (SRAM Ø,1) addressed by the first memory address (sa1), in accordance with the sequence (Q), where, during access
--- in accordance with the status information (sti), a data item (d) which has been read and is present on the driven submemory (SRAM Ø,1) is temporarily stored in the temporary store (ZSP) on a processor clock pulse basis and is picked up from said temporary store by the processor (MP) on an access cycle basis, or a data item (d) transmitted by the processor (MP) is stored in the respective, processor-clock-controlled temporary store (ZSP) and is forwarded to the addressed submemory (SRAM Ø,1),
**characterized**
- **in that** the memory (SP) is in the form of a static read/write memory, and
- **in that** the drive logic unit (ALS)
-- has an address generation device for automatically generating, on the basis of the first memory address (sa1), a respective subsequent memory address (sfa1) for the further submemories (SRAM Ø,1) in accordance with the prescribed sequence (Q) and for separately and simultaneously applying the first memory address (sa1) and the respectively generated subsequent memory addresses (sfa1) to each submemory (SRAM Ø,1), as a result of which a read or write cycle is initiated in all submemories (SRAM Ø,1) in accordance with the status information (sti), and
-- has a comparison device for comparing a subsequent memory address formed by the processor (MP) with a subsequent memory address (sfa1, sfa2, sfa3), corresponding in terms of order, which is formed by the address generation device (AST), and for ending the sequence (Q) of access operations (Z) if there is no match.

7. Arrangement according to Claim 6,
**characterized**
**in that** the drive logic unit (ALS) is formed by a clock and logic circuit (TLS) and by the temporary store (ZSP), and in that the clock and logic circuit (TLS)
- has an address temporary store (ASP) and is connected to those address lines (ADL4..n) of the processor bus (B) whose address information (ai) is to be forwarded unchanged to the submemories (SRAM Ø,1), where the processor-clocked address temporary store (ASP) temporarily stores the address information (ai) and directs it on an access cycle basis to the submemories (SRAM 0,1) via further address lines (ADL4..n), and
- is equipped with an address controller (AST) and is connected to those address lines (ADL2,3) of the processor bus (B) whose address information (ai) is forwarded to the addressed submemory (SRAM Ø,1) during the first access cycle (Z), and whose subsequent address information (ai) is formed, checked and directed to the relevant submemories (SRAM Ø,1) during the subsequent access cycles (Z) of a sequence (Q) in the address controller (AST), and
- is formed by a temporary store controller (ZSPS) which controls the temporary store (ZSP).

8. Arrangement according to Claim 6 or 7,
**characterized**
**in that** the microprocessor (MP) and the temporary store ZSP are connected to a drive device (ALD) for dynamic memories (DRAM), and in that the drive device (ALD) and the temporary store (ZSP) are connected to a dynamic memory (DRAM) for the purpose of reading and writing data (d), the dynamic memory DRAM having higher access times as compared with the static submemories (SRAM Ø,1).

## Revendications

1. Procédé pour commander une séquence (Q) prescrite d'accès (Z) d'un processeur (MP) par l'intermédiaire d'un bus (B) de processeur vers une mémoire (SP) d'écriture-lecture statique associée, formée par des sous-mémoires (SRAM Ø,1) pouvant être adressées individuellement, dans lequel les données (d) sont transférées du processeur (MP) ou au processeur (MP) chaque fois par l'intermédiaire d'une mémoire (ZSP) intermédiaire commandée par cycles d'accès et dans lequel un cycle (Z) d'accès à la mémoire (SP) commandé par l'intermédiaire du bus (B) de processeur comprend m cadences de processeur ainsi qu'un cycle d'écriture ou de lecture se déroulant dans la mémoire (SP) de n cadences de processeur, n étant supérieur à m,
- dans lequel une séquence (Q) d'accès (Z) est initiée par au moins une première adresse (sa1) de mémoire formée par le processeur et par des informations (sti) d'état qui commandent une lecture ou une écriture de donnée (d) dans ou sur la mémoire (SP) d'écriture-lecture statique,
- dans lequel, dans une logique (ALS) de commande insérée entre le processeur (MP) et les sous-mémoires (SRAM Ø,1),
- - après réception de la première adresse (sa1) de mémoire par le processeur (MP), celle-ci est retransmise à la sous-mémoire (SRAM Ø,1) adressée et il est généré automatiquement et indépendamment du processeur (MP), pour les sous-mémoires (SRAM Ø,1) supplémentaires, chaque fois une adresse (sra1) suivante de mémoire en fonction de la séquence (Q) prescrite, les adresses (sfa1) suivantes de mémoire associée et la première adresse (sa1) de mémoire étant amenées séparément et simultanément à chaque sous-mémoire (SRAM Ø,1), ce qui fait qu'il est initié, en fonction des informations (sti) d'état, un cycle de lecture ou d'écriture dans toutes les sous-mémoires (SRAM Ø,1), et
- - à partir de la sous-mémoire (SRAM Ø,1) adressée par la première adresse (sa1) de mémoire, les sous-mémoires (SRAM Ø,1) sont commandées cycliquement en succession ainsi que conformément aux cycles d'accès, en fonction de la séquence (Q), pour une commande,
--- en fonction des informations (sti) d'état, une donnée (d) lue, présente sur la sous-mémoire (SRAM Ø,1) commandée étant mise en mémoire dans la mémoire (ZSP) intermédiaire conformément à la cadence de processeur et enlevée de celle-ci par le processeur (MP) conformément aux cycles d'accès ou une donnée (d) transmise par le processeur (MP) étant mise en mémoire dans la mémoire (ZSP) intermédiaire et retransmise à la sous-mémoire (SRAM Ø,1) adressée,
la séquence (Q) d'accès (Z) étant terminée si une adresse suivante de mémoire formée par le processeur ne coïncide pas avec l'adresse (sfa1, sfa2, sfa3) de mémoire correspondante dans la succession, formée dans la logique (ALS) de commande, et,
--- dans la mesure où cela est prévu en fonction de la séquence (Q) d'accès (Z), l'adresse (sa1, sfa1, sfa2) de mémoire du moment est changée, amenée à la sous-mémoire (SRAM Ø,1) commandée et, en fonction des informations (sti) d'état, un accès (Z) à la sous-mémoire (SRAM Ø,1) associée est initié.

2. Procédé suivant la revendication 1, **caractérisé en ce que** le nombre des sous-mémoires (SRAM Ø,1) est déterminé en fonction de la valeur absolue de la différence (n - m) entre le nombre n des cadences de processeur d'un cycle de lecture ou d'écriture se déroulant dans la mémoire (SP) et le nombre m des cadences de processeur d'un cycle (Z) d'accès à la mémoire (SP) commandé par l'intermédiaire du bus (B) de processeur.

3. Procédé suivant l'une des revendications précédentes,
**caractérisé en ce que**, après la première adresse (sa1) de mémoire comprenant plusieurs bits d'adresses ayant le poids 2^{x}, il est associé des adresses (sfa1, sfa2, sfa3) suivantes de mémoire prévues dans la logique (ALS) de commande pour l'adressage cyclique successif des sous-mémoires (SRAM Ø,1), en fonction de la séquence (Q) prescrite d'accès (Z), aux bits d'adresses d'informations (Ø,1) logiques représentant des informations (ai) d'adresses de telle manière que les sous-mémoires (SRAM Ø,1) sont adressées cycliquement en succession.

4. Procédé suivant la revendication 3, **caractérisé en ce que**, pour deux sous-mémoires (SRAM Ø,1) et une séquence (Q) de quatre cycles (Z) d'accès, pour une largeur de bus de processeur de 32 bits, il est formé pour un adressage cyclique successif des sous-mémoires (SRAM Ø,1), dans la logique (ALS) de commande, indépendamment du processeur (MP), à partir des informations (Ø,1) logiques, représentant les informations (ai) d'adresses, des bits d'adresses de la première adresse (sa1) de mémoire ayant le poids 2² et 2³, trois adresses (sfa1, sfa2, sfa3) suivantes de mémoire,
- la première adresse (sfa1) suivante de mémoire ayant l'information (Ø,1) logique complémentaire du bit d'adresse ayant le poids 2²,
- la deuxième adresse (sfa2) suivante de mémoire ayant l'information (Ø,1) logique complémentaire du bit d'adresse ayant le poids 2³, et
- la troisième adresse (sfa3) suivante de mémoire ayant l'information (Ø,1) logique complémentaire du bit d'adresse ayant le poids 2² et 2³
étant formées.

5. Procédé suivant l'une des revendications précédentes,
**caractérisé en ce qu'**un cycle (Z) d'accès conforme au processeur est exécuté en l'espace de deux ou trois cadences de processeur, le nombre des cadences de processeur étant, lors du premier cycle (Z) d'accès d'une séquence (Q), adapté à la durée d'accès à la mémoire (SP) et des cycles (Z) d'accès conformes au processeur étant prévus pour les cycles (Z) d'accès supplémentaires d'une séquence (Q).

6. Dispositif de commande d'une séquence (Q) prescrite d'accès (Z) d'un processeur (MP) à une mémoire (SP) associée, formée par des sous-mémoires (SRAM Ø,1) pouvant être adressées individuellement, par l'intermédiaire d'un bus (B) de processeur, un cycle (Z) d'accès à la mémoire (SP) commandé par l'intermédiaire du bus (B) de processeur comportant m cadences de processeur et un cycle de lecture ou d'écriture se déroulant dans la mémoire (SP) comportant n cadences de processeur, n étant supérieur à m,
- dans lequel une logique (ALS) de commande est insérée entre le processeur (MP) et les sous-mémoires (SRAM Ø,1),
- - comportant une mémoire intermédiaire (ZSP) commandée par cycles d'accès pour transférer les données (d) entre le processeur (MP) et la mémoire (SP) d'écriture-lecture statique,
- - comportant des moyens de commande pour introduire une séquence (Q) d'accès (Z) par au moins une première adresse (sa1) de mémoire, formée par le processeur (MP), et par des informations (sti) d'état qui commandent une lecture ou une écriture de données dans ou sur la mémoire (SP) d'écriture-lecture statique, et
- - comportant des moyens d'accès à la mémoire pour l'accès successif de manière cyclique ainsi que conforme aux cycles d'accès aux sous-mémoires (SRAM Ø,1) à partir de la sous-mémoire (SRAM Ø,1) adressée par la première adresse (sa1) de mémoire, en fonction de la séquence (Q), lors de l'accès
- - - une donnée (d) lue, présente sur la sous-mémoire (SRAM Ø,1) commandée, étant, en fonction des informations (sti) d'état, mise en mémoire dans la mémoire (ZST) intermédiaire et enlevée de celle-ci par le processeur (MP) conformément aux cycles d'accès ou une donnée (d) transmise par le processeur (MP) étant mémorisée dans la mémoire (ZSP) intermédiaire associée, commandée à la cadence de processeur, ainsi que retransmise à la sous-mémoire (SRAM Ø,1) adressée,
**caractérisé**
- en ce que la mémoire (SP) est réalisée en mémoire d'écriture-lecture statique, et
- en ce que la logique (ALS) de commande
- - comporte un dispositif pour générer des adresses en vue de générer de manière autonome, en partant de la première adresse (sa1) de mémoire, une adresse (sfa1) suivante d'adresse associée pour les sous-mémoires (SRAM Ø,1) supplémentaires, en fonction de la séquence (Q) prescrite, ainsi que pour appliquer séparément et simultanément la première adresse (sa1) de mémoire ainsi que les adresses (sfa1) suivantes de mémoire chaque fois générées à chaque sous-mémoire (SRAM Ø,1), ce qui fait que, en fonction des informations (sti) d'état, un cycle de lecture ou d'écriture est initié dans toutes les sous-mémoires (SRAM Ø,1), et
- - comporte un dispositif de comparaison pour comparer une adresse suivante de mémoire formée par le processeur (MP) à une adresse (sfa1, sfa2, sfa3) suivante de mémoire formée par le dispositif (AST) pour générer des adresses, correspondantes dans la succession, et pour mettre fin à la séquence (Q) d'accès (Z) en cas de non coïncidence.

7. Procédé suivant la revendication 6, **caractérisé en ce que** la logique (ALS) de commande est formée par un circuit (TLS) logique et d'horloge et par la mémoire (ZSP) intermédiaire, et **en ce que** le circuit (TLS) logique et d'horloge
- comporte une mémoire (ASP) intermédiaire d'adresses et est relié aux lignes (ADL4 ..n) d'adresses du bus (B) de processeur dont les informations (ai) d'adresses sont à retransmettre de manière inchangée aux sous-mémoires (SRAM Ø,1), les informations (ai) d'adresses étant mises en mémoire dans la mémoire (ASP) intermédiaire d'adresses cadencées par le processeur et étant envoyées conformément aux cycles d'accès, par l'intermédiaire de lignes (ADL4 ..n) lignes d'adresses supplémentaires, aux sous-mémoires (SRAM Ø,1), et
- est muni d'une commande (AST) d'adresses et est relié aux lignes (ADL2, 3) d'adresses du bus de processeur dont les informations (ai) d'adresses sont retransmises lors du premier cycle (Z) d'accès à la sous-mémoire (SRAM Ø,1) adressée et dont les informations (ai) d'adresses suivantes sont formées lors des cycles (Z) d'accès suivants d'une séquence (Q) dans la commande (AST) d'adresses, sont vérifiées et sont envoyées aux sous-mémoires (SRAM Ø,1) concernées, et
- est formé par une commande (ZSPS) de mémoire intermédiaire commandant la mémoire (ZSP) intermédiaire.

8. Dispositif suivant la revendication 6 ou 7, **caractérisé en ce que** le microprocesseur (MP) et la mémoire (ZSP) intermédiaire sont reliés à un dispositif (ALD) de commande pour des mémoires (DRAM) dynamiques et **en ce que** le dispositif (ALD) de commande et la mémoire (ZSP) intermédiaire sont reliés en vue d'une lecture et d'une écriture de données (d) à une mémoire (DRAM) dynamique, la mémoire (DRAM) dynamique comportant de plus grandes durées d'accès par rapport aux sous-mémoires (SRAM Ø,1) statiques.
